Europäisches Patentamt

European Patent Office

Office européen des brevets

(19)

(11) Veröffentlichungsnummer : **0 133 859**
**B1**

(12) # EUROPÄISCHE PATENTSCHRIFT

(45) Veröffentlichungstag der Patentschrift :
21.01.87

(21) Anmeldenummer : 83810363.8

(22) Anmeldetag : 15.08.83

(51) Int. Cl.⁴ : **H 02 K 15/02**, H 02 K 1/06,
B 21 D 28/22

(54) Verfahren und Vorrichtung zur Herstellung von aus Blechlamellen mit Zentrumwinkelversetzung bestehenden Paketen von elektrischen Maschinen, insbesondere von Rotor- oder Statorpaketen.

(43) Veröffentlichungstag der Anmeldung :
13.03.85 Patentblatt 85/11

(45) Bekanntmachung des Hinweises auf die Patenterteilung : 21.01.87 Patentblatt 87/04

(84) Benannte Vertragsstaaten :
DE FR GB IT

(56) Entgegenhaltungen :
EP-A- 0 042 046
EP-A- 0 042 047
DE-A- 2 838 685
US-A- 3 202 851
Patent Abstracts of Japan, Band 5, Nr. 40, 17. März 1981

(73) Patentinhaber : Essa Fabrique de Machines S.A.

CH-2555 Brügg (CH)

(72) Erfinder : Guidi, Alfons
Föhrenweg 1
CH-2554 Meinisberg (CH)
Erfinder : Jost, Bernhard
Zälgli 38
CH-3315 Bätterkinden (CH)

(74) Vertreter : Velgo, Miroslav et al
Bovard AG Patentanwälte VSP Optingenstrasse 16
CH-3000 Bern 25 (CH)

EP 0 133 859 B1

## Beschreibung

Bei verschiedenen elektromagnetischen Aggregaten sind die Pakete mit schraubenlinienförmig verdrehten Nuten an der äusseren oder inneren Kontur üblich. Die Pakete bestehen aus einer Vielzahl von Einzellamellen, die aus einem Stanzband ausgestanzt werden, wobei sie mit Mittelöffnungen und Nuten versehen werden.

Gemäss der EP-A-133 858 werden die Lamellen durch Fliessprägen mittels Stempel unter gleichzeitiger Gegenkrafteinwirkung von Gegenstempeln einseitig mit Vertiefungen und auf der anderen Seite mit mit den Vertiefungen übereinstimmenden und ihnen gegenüberliegenden Erhebungen versehen. Nachher werden die so gebildeten Lamellen (die jedoch nicht verdreht werden) zu einem Paket aufeinandergeschichtet, wobei die Erhebungen in die Vertiefungen, deren Tiefe mindestens fünfzig Prozent der Lamellendicke erreicht, mit Vorspannung eingreifen. Dieses Dokument fällt unter Artikel 54 (3).

Zur Unterbrechung der kontinuierlich fortlaufenden Verbindung der Lamellen, das heisst zur Auftrennung in Pakete, ist es bekannt, eine Trennungslamelle zu verwenden, bei welcher anstelle der Vertiefung ein zylindrisches Loch gelocht wird, in welches die Erhebung der benachbarten Lamelle eingreift (auch in der EP-A-133 858 gezeigt).

Aus der EP-A-42 047 ist eine Vorrichtung zur Bildung eines Rotors von auf einer Achse aufeinandergeschichteten Lamellen bekannt. Die Ausschneidestation dieser Vorrichtung ist nicht mit einer Verdrehstation in einer Einheit kombiniert. Die Lamellen werden im Werkzeug ausgeschnitten und für den Weitertransport ins Band zurückgedrückt. Die Drehung von Lamelle zu Lamelle erfolgt direkt durch eine Zahnstange, wobei der Drehwinkel durch den Keiltrieb zur Betätigung der Zahnstange unveränderlich vorgegeben ist. Mit dieser Vorrichtung ist eine kontinuierliche Arbeitsweise nicht denkbar.

Aus der DE-A-2 838 685 ist auch eine Vorrichtung zur Bildung eines Blechpaketes bekannt. Diese besteht aus einem Folgewerkzeug mit Patrize und Matrize und mit mehreren Arbeitsstationen, deren die letzte eine im Werkzeugunterteil angeordnete Ausschneidestation ist, und aus einem in die Ausschneidestation eingreifenden Stempel, wobei die Ausschneidestation zugleich eine Verdrehstation mit einem Matrizenträger und einem Paket-Abführkanal ist.

Der im Patentanspruch 1 und 3 angegebenen Erfindung liegt die Aufgabe zugrunde, ein Verfahren und eine Vorrichtung zur Herstellung von aus aufeinandergeschichteten Blechlamellen mit Mittelöffnungen und Nuten bestehenden Paketen von elektrischen Maschinen vorzuschlagen bzw. zu schaffen, bei welchen das bekannte Verfahren bzw. die bekannte Vorrichtung in dem Sinne weiterverbessert werden, dass die Pakete in einer einzigen Durchlauffertigung präzis hergestellt werden. Man soll mit einer einzigen Vorrichtung eine viel grössere Arbeitsleistung als bei dem Stand der Technik erzielen.

Die Aufgabe des Verfahrens wird durch die Merkmale des Patentanspruches 1 gelöst.

Die erfindungsgemässe Vorrichtung zum Ausführen des Verfahrens ist im Anspruch 3 definiert.

Die Erfindung wird nachstehend anhand der Zeichnung beispielsweise näher erläutert. Es zeigen

Figur 1 ein Streifenschema in Draufsicht bei der Herstellung einer Rotorlamelle aus einem Stanzband,

Figur 2 eine Draufsicht auf eine aus dem Stanzband ausgeschnittene fertige Rotorlamelle,

Figur 3 eine Ansicht im Schnitt der Rotorlamelle nach der Fig. 2,

Figur 4 eine Ansicht im Schnitt von untereinander verbundenen Rotorlamellen mit zwei Trennungslamellen,

Figur 5 eine Teilansicht im Schnitt einer drehbar gelagerten Ausschneidestation eines Folgewerkzeuges für die Herstellung von Rotorpaketen,

Figur 6 eine Teilansicht im Schnitt der drehbar gelagerten Ausschneidestation nach der Fig. 5, mit einer zu der Fig. 5 anderen Arbeitsphase des Stempels,

Figur 7 eine Ansicht im Schnitt eines Antriebsrades und einer Schneckenwelle mit der Schnecke,

Figur 8 einen Schnitt entlang der Linie VIII-VIII der Fig. 9,

Figur 9 eine Ansicht teilweise im Schnitt einer Zahnstange und des Antriebsrades nach der Fig. 7,

Figur 10 eine Draufsicht im Schnitt auf die drehbar gelagerte Ausschneidestation nach der Fig. 5 mit drei Bremselementen,

Figur 11 eine Ansicht im Schnitt eines Rotorpakets mit in gleichmässiger Steigung verdrallten Nuten und

Figur 12 eine Ansicht im Schnitt eines Rotorpakets mit in sich fortschreitend ändernder Steigung verdrallten Nuten.

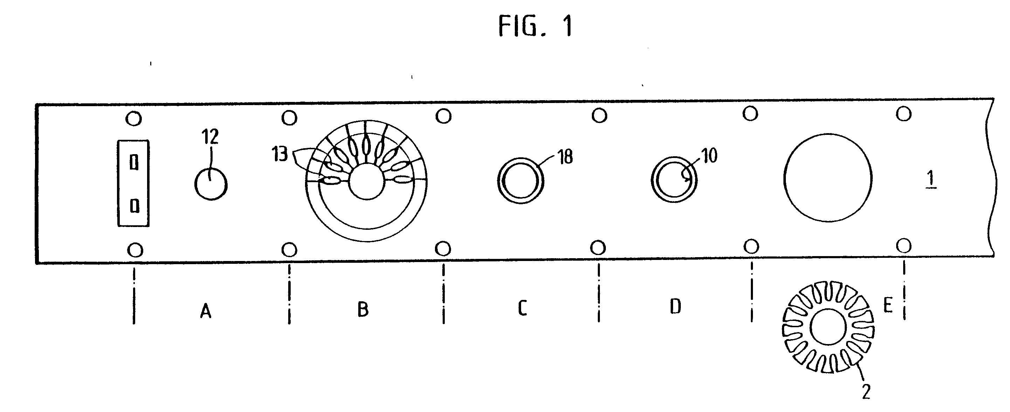

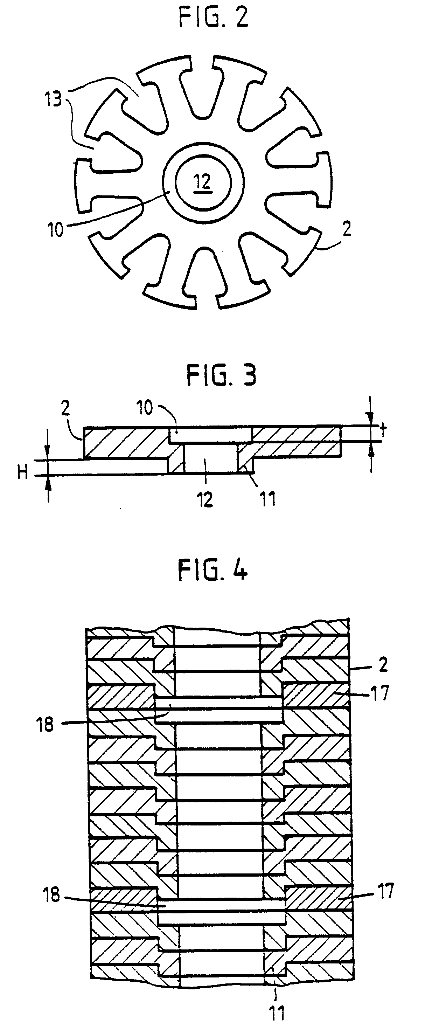

In einem Folgewerkzeug mit mehreren Arbeitsstationen werden Rotorlamellen 2 mit kreisrunden Mittelöffnungen 12 und länglichen Nuten 13 aus einem Stanzband 1 (siehe Fig. 1) ausgestanzt und aufeinander geschichtet, um Rotorpakete von elektrischen Maschinen zu bilden. Die identischen Rotorlamellen 2 werden gleichzeitig in dem gleichen Folgewerkzeug einseitig mit Vertiefungen 10 und auf der anderen Seite mit mit den Vertiefungen 10 übereinstimmenden und ihnen gegenüberliegenden Erhebungen 11 in Form von Absetzungen versehen (Fig. 3). Dies geschieht im Fliessprägen durch nicht dargestellte Stempel unter gleichzeitiger Gegenkrafteinwirung von Gegenstempeln. Die Absetzungen 11 werden beim Zusammenbau jedes Paketes in die Vertiegungen 10, deren Tiefe mindestens fünfzig Prozent der Lamellendicke erreicht hat, mit Vorspannung eingepresst. Pro Paket wird jeweils eine Lamelle, die als Trennungslamelle 17 dient, anstelle mit einer Vertiefung 10 und einer Absetzung 11 mit einem zylindrischen Loch 18 versehen (siehe die Arbeitsposition C der Fig. 1). In das Loch 18 greift dann die Absetzung 11 der benachbarten Lamelle ein.

In der Fig. 1 sind die einzelnen Arbeitspositionen wie folgt bezeichnet : A-Lochstanzen (Mittelöffnung 12), B-Rotornutenstanzen (Nuten 13), C-gesteuertes Lochen (Loch 18 der Trennungslamelle 17), D-Fliessprägen (Vertiefungen 10 und Absetzungen 11) und E-Rotorausschneiden. In einer Ausschneidestation werden die fertigen Rotorlamellen durch Aufeinanderschichtung zu Paketen verbunden.

Jeweils nach einer vorgegebenen Lamellenzahl wird die Trennungslamelle 17 periodisch aufgelocht (Loch 18) wobei der Lochdurchmesser mit dem vorstehenden Teil der Absetzung 11 der benachbarten Lamelle 2 übereinstimmt. Die Paketlänge entspricht somit der Anzahl der miteinander verbundenen Einzellamellen.

Die Vertiefungen 10 und die Absetzungen 11 (Fig. 2 und 3) werden konzentrisch um die vorher ausgestanzten Mittelöffnungen 12 fliessgeprägt. Die Vertiefungen 10 und Absetzungen 11 können in beliebigem radialem Abstand von den Mittelöffnungen 12 ausgebildet werden. Sie haben die Form eines Kreisringes. Die Höhe H jeder Absetzung 11 ist kleiner als die Tiefe t jeder Vertiefung 10, so dass die nach dem Einpressen der Absetzungen 11 in die Vertiefungen 10 untereinander verbundenen Lamellen 2 flach aufeinander liegen (Fig. 4).

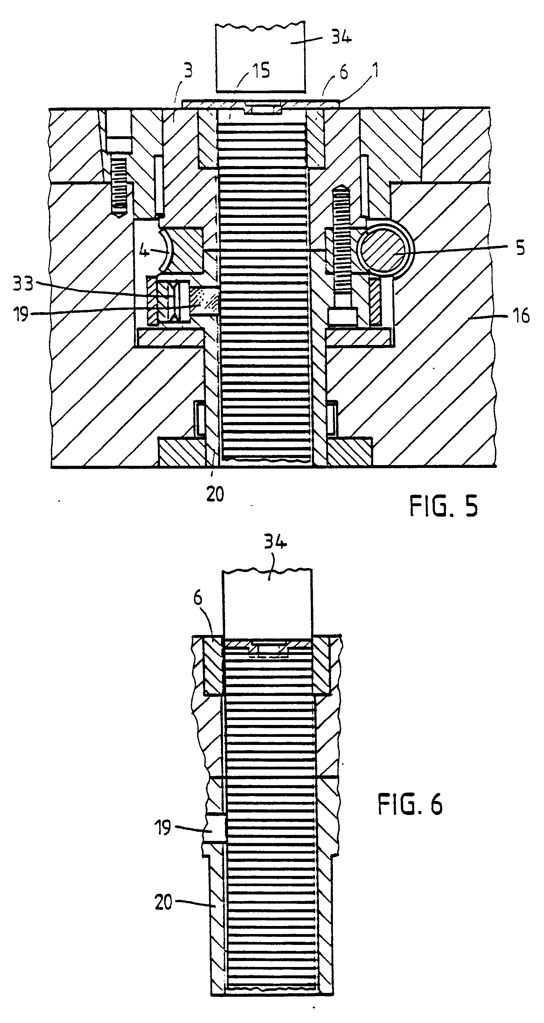

In den Fig. 5 und 6 ist eine drehbar gelagerte Ausschneidestation 15 teilweise dargestellt. Diese Ausschneidestation 15 befindet sich im Unterteil 16 des Folgewerkzeuges. Im Werkzeugunterteil 16 sitzt ein Schneidring 6 auf einem drehbaren, rohrähnlichen Matrizenträger 3. Der Matrizenträger 3 ist auf seiner Mantelfläche mit einer Schneckenradverzahnung 4 versehen, in welche eine Schnecke 5 eingreift und die Schneidring-Drehbewegung rhythmisch intermittierend im Pressentakt antreibt.

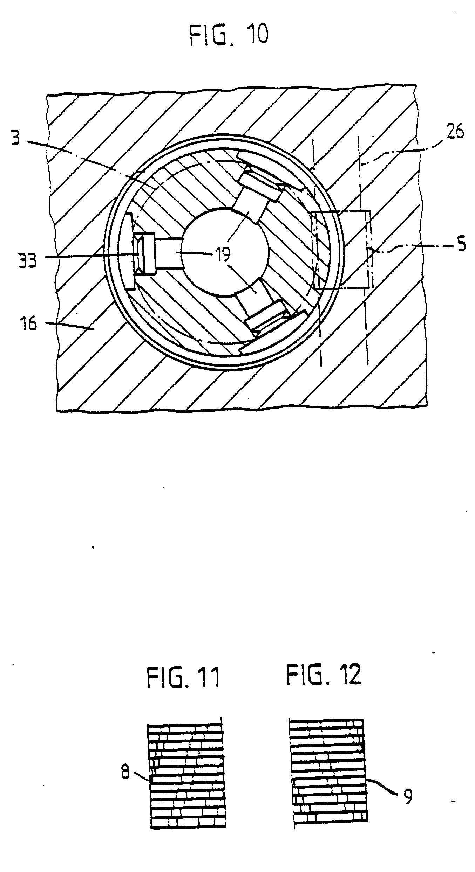

Der Antrieb der Schnecke 5 kann für Pakete mit in gleichmässiger Steigung verdrallten Nuten 13 (siehe Fig. 11) von der nicht dargestellten Presse direkt über ihre Stösselbewegung erfolgen. Für Pakete mit in sich fortschreitend ändernder Steigung verdrallten Nuten 13 (siehe Fig. 12) kann die Schnecke oder eine nicht dargestellte, in eine auf der Mantelfläche des Matrizenträgers gebildete Zahnradverzahnung eingreifende Zahnradtransmission mit einem pressenseitig synchronisierten Eigenantrieb, z. B. mittels Schrittmotors, rhythmisch intermittierend angetrieben werden.

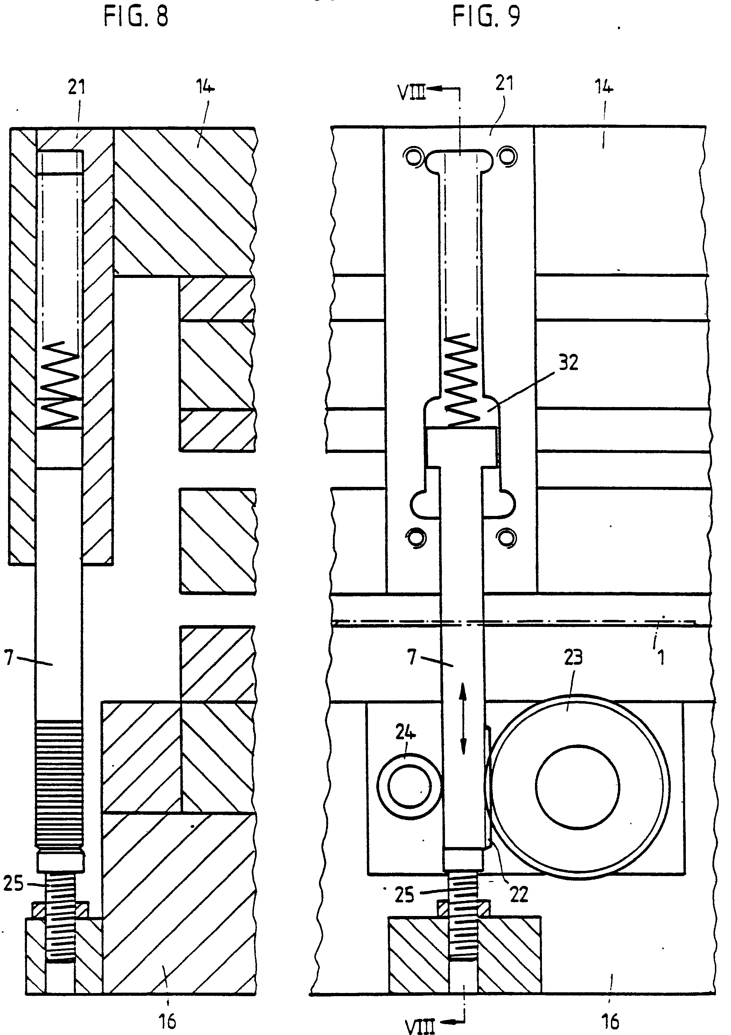

Durch die Stösselbewegung wird ein Teil 21 im Werkzeugoberteil 14 hin- und herbewegt (Fig. 8 und 9). Mit diesem beweglichen Teil 21 steht ein Ende einer Zahnstange 7 in Verbindung, welches Ende im Schlitz 32 des Teiles 21 unter Federbelastung untergebracht ist. Das andere Ende der Zahnstange 7 weist eine Verzahnung 22 auf, die im Werkzeugunterteil 16 mit der Verzahnung eines Antriebsrades 23 in Eingriff steht. Auf der dem Antriebsrad 23 gegenüberliegenden Seite der Zahnstange 7 ist eine Andruckrolle 24 zum Führen der Zahnstange 7 vorgesehen. Die Hubgrösse der Zahnstange 7 ist mittels einer Schraube 25 einstellbar.

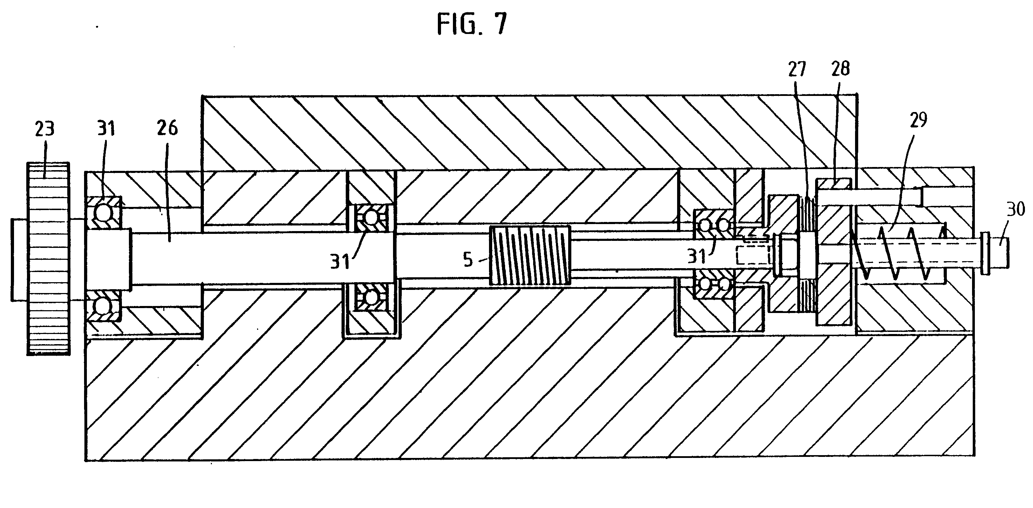

Das Antriebsrad 23 ist mit einer nicht dargestellten Freilaufkupplung versehen und liegt auf einem Ende der Schneckenwelle 26, die die Schnecke 5 trägt (Fig. 7). Auf dem anderen Ende stützt sich die Schneckenwelle 26 gegen eine Reibungsbremse 27 ab. Der Druck auf die Reibungsbremse 27 ist mittels einer Schraube 30 über eine Feder 29 und eine Scheibe 28 einstellbar. Die Schneckenwelle 26 ist in Kugellagern 31 gelagert.

Durch den Hub der Zahnstange 7, dessen Grösse vorgewählt wurde, wird das Antriebsrad 23 und somit die Schneckenwelle 26 mit der Schnecke 5 um einen gewünschten Winkel rhytmisch intermittierend verdreht. Diese Drehbewegung wird über die Schneckenradverzahnung 4 auf den Matrizenträger 3 übertragen. Dadurch wird die zuletzt ausgeschnittene und mit dem Paket verbundene Rotorlamelle um den gewünschten Zentrumwinkel versetzt, bevor die im Ausschneiden begriffene, folgende Lamelle mit dieser vorher ausgeschnittenen Lamelle verbunden wird. Das Antriebsrad 23 dreht sich und damit die Schneckenwelle 26 beim Rückhub der Zahnstange 7, nicht aber bei ihrem Niedergang, weil dann das Antriebsrad durch die Freilaufkupplung entkuppelt wird.

Die fertigen Lamellen 2 werden in der Ausschneidestation 15 durch den vom Stempel 34 ausgeübten Druck untereinander verbunden, welcher Stempel sich in seiner untersten Lage befindet.

Auf diese Weise wird vor dem Zusammenbau der Pakete eine Zentrumwinkelversetzung zwischen den einzelnen Lamellen 2 erreicht. Die Zentrumwinkelversetzung zwischen den Lamellen bei Paketen mit schraubenlinienförmig verdrehten Nuten 13 ist gering. Eine vielfach grössere Zentrumwinkelversetzung bis 90° oder sogar 180° kann für Pakete aus Lamellen mit erheblichen Dickenunterschieden des Stanzbandes 1 gefragt sein. Im Stanzband 1 kann nämlich die Dicke quer zur Walzrichtung variieren, das heisst, der Stanzbandquerschnitt ist keilförmig. Pakete aus gleichsinnig aufeinandergeschichteten Lamellen 2 von derartigen Stanzbändern sind krumm, weshalb zum Ausgleich solche Lamellen einzeln oder gruppenweise um einen Symmetriewinkel versetzt verbunden werden.

Für derartige Arbeitsaufgaben wird der Matrizenträger 3 anstelle der Schneckenradverzahnung mit der Zahnradverzahnung versehen. Zum Antrieb der rhythmisch intermittierenden Drehbewegung beim Paketieren der Einzellamellen 2 mit grosser Winkelversetzung ist dann z. B. ein maschinenseitig angetriebenes Kurvenschneckengetriebe oder auch ein maschinenseitig synchronisierter Eigenantrieb geeignet.

Die Herstellung von Paketen mit zueinander um 180° Drehwinkel versetzten Lamellengruppen verlangt nur noch periodische Vorwärts- und Rückwärtsdrehung des Matrizenringträgers 3. Für diesen Fall genügt schon ein maschinenseitig gesteuerter, doppelt wirkender Zahnstangenantrieb.

Im Matrizenträger 3 nach der Fig. 5 sind auch drei radial auf die ausgeschnittenen Lamellen 2 einwirkende Bremselemente 19 eingebaut (Fig. 10). Diese erzeugen den zum Einpressen der vorstehenden Absetzung 11 an der im Ausschneiden begriffenen Lamelle 2 in die Vertiefung 10 der vorher ausgeschnittenen Lamelle 2 erforderlichen Widerstand. Die Bremselemente sind durch Tellerfedern 33 belastet. Am Ausgang des Matrizenträgers 3 ist auch ein Paket-Abführkanal 20 mitdrehend mit dem Matrizenträger 3 angeflanscht, in den ebenfalls Bremselemente eingebaut sein können.

Mit 8 ist ein Rotorpaket mit in gleichmässiger Steigung verdrallten Nuten und mit 9 ein Rotorpaket mit in fortschreitend ändernder Steigung bezeichnet (Fig. 11 und 12).

Bei dem oben beschriebenen Verfahren und der oben beschriebenen Vorrichtung werden die fertigen Lamellen mit Zentrumwinkelversetzung in einem einzigen Folgewerkzeug zu fertigen Paketen verbunden. Die axiale Verbindungskraft zwischen den Lamellen gewährleistet dabei, dass die Pakete bei der Weiterverarbeitung gefahrlos gehandhabt werden können. Die Steigung der schraubenlinienförmigen Nutverdrehung, also die Zentrumwinkelversetzung von Lamelle zu Lamelle, ist kontinuierlich einstellbar bzw. steuerbar.

**Patentansprüche**

1. Verfahren zur Herstellung von aus aufeinandergeschichteten Blechlamellen mit Mittelöffnungen und Nuten bestehenden Paketen von elektrischen Maschinen, insbesondere von Rotoroder Statorpaketen, welche Nuten so verdrallt sind, dass sie in Paketen schraubenlinienförmige Durchgangsöffnungen bilden, in welchem Verfahren aus einem Band identische Lamellen ausgestanzt und durch Fliessprägen mittels Stempel unter gleichzeitiger Gegenkrafteinwirkung von Gegenstempeln einseitig mit Vertiefungen und auf der anderen Seite mit mit den Vertiefungen übereinstimmenden und ihnen gegenüberliegenden Erhebungen versehen werden, welche Erhebungen beim Zusammenbau jedes Paketes in die Vertiefungen, deren Tiefe mindestens fünfzig Prozent der Lamellendicke erreicht hat, mit Vorspannung eingreifen, wobei bei einer Lamelle pro Paket, die als Trennungslamelle dient, anstelle der Vertiefung ein zylindrisches Loch gelocht wird, in welches die Erhebung der benachbarten Lamelle eingreift, und wobei die Vertiefungen (10) und die die Form von Absetzungen aufweisenden Erhebungen (11) als Kreisringe konzentrisch um die vorher ausgestanzten Mittelöffnungen (12) in jeweils einem einzigen Arbeitsvorgang fliessgeprägt werden, wonach jede so gebildete und aus dem Stanzband (1) ausgeschnittene fertige Lamelle vor dem Zusammenbau mit der ihr folgenden Lamelle zwecks Nutverdrallung automatisch um einen kontinuierlich einstellbaren Zentrumwinkel versetzt wird.

2. Verfahren nach Patentanspruch 1, dadurch gekennzeichnet, dass die Vertiefungen (10) und Absetzungen (11) entweder direkt am Rand jeder Mittelöffnung (12) oder im beliebigen radialen Abstand von dem Rand jeder Mittelöffnung (12) gebildet werden.

3. Vorrichtung zum Ausführen des Verfahrens zur Herstellung von aus aufeinander geschichteten Blechlamellen mit Mittelöffnungen bestehenden Paketen, wobei die Lamellen um die Mittelöffnungen Vertiefungen und Erhebungen in Form von konzentrischen Kreisringen aufweisen nach Patentanspruch 1, bestehend aus einem Folgewerkzeug mit Patrize und Matrize und mit mehreren Arbeitsstationen, deren die letzte eine im Werkzeugunterteil (16) angeordnete Ausschneidestation (15) ist, und aus einem in die Ausschneidestation (15) eingreifenden Stempel (34), wobei die Ausschneidestation (15) zugleich eine Verdrehstation mit einem Matrizenträger (3) und einem Paket-Abführkanal (20) ist, und dass die Mantelfläche des Matrizenträgers (3) mit einer Schneckenverzahnung (4), in welche eine angetriebene Schnecke (5) rhythmisch intermittierend eingreift, oder mit einer Zahnradverzahnung versehen ist, in welche eine die Zahnradtransmission antreibende Zahnstange rhythmisch intermittierend eingreift, wobei der Matrizenträger nach dem Ausschnitt einer Lamelle um einen kontinuierlich einstellbaren Zentrumwinkel verdreht wird.

4. Vorrichtung nach Patentanspruch 3, dadurch gekennzeichnet, dass im Matrizenträger (3) radial auf die ausgeschnittenen Lamellen (2) einwirkende Bremselemente (19) eingebaut sind, um den erforderlichen Widerstand bei der Verbindung der einzelnen fertigen Lamellen (2) untereinander zu leisten.

**Claims**

1. Process for manufacturing bundles, consisting of stacked laminations having centre openings and grooves, of electric machines, particularly of rotor or stator bundles, which grooves are twisted in such a way that they form helical through openings in bundles, in which process identical laminations are punched out of a strip and, by flow-embossing by means of punches with simultaneous counterforce action of counterpunches, are provided on one side with depressions and on the other side with elevations opposite to and matching the depressions, which elevations, during assembly of each bundle, engage with biasing in the depressions, the depth of which has reached at least fifty percent of the thickness of the lamination, a cylindrical hole in which the elevation of the adjoining lamination engages being perforated instead of the depression in one lamination, serving as a separating lamination, per bundle, and the depressions (10) and the elevations (11) having the shape of offsets are flow-embossed concentrically about the previously punched-out centre openings (12) in one single operation each as circular rings, whereafter each finished lamination thus formed and cut out of the punching strip (1), prior to assembly with the lamination following it, is automatically displaced about a continuously adjustable centre angle for the purpose of groove-twisting.

2. Process according to patent claim 1, characterized in that the depressions (10) and offsets (11) are formed either directly at the edge of each centre opening (12) or at any desired radial distance from the edge of each centre opening (12).

3. Device for carrying out the process for manufacturing bundles consisting of stacked laminations having centre openings, the laminations having depressions and elevations in the shape of concentric circular rings about the centre openings, according to patent claim 1, consisting of a follow-on tool having a top die and a bottom die and having a plurality of work stations, the last of which is a cutting-out station (15) disposed in the lower part (16) of the tool, and of a punch (34) engaging in the cutting-out station (15), the cutting-out station (15) being at the same time a torsion station having a die support (3) and a bundle-removal channel (20), and that the surface of the die support (3) is provided with a worm toothing (4) with which a driven worm (5) rhythmically intermittently meshes, or with a gear toothing with which a rack driving the gear-wheel transmission rhythmically intermittently meshes, the die support being rotated about a continuously adjustable centre angle after the cutting-out of a lamination.

4. Device according to patent claim 3, characterized in that braking elements (19) acting radially upon the cut-out laminations (2) are incorporated in the die support (3) in order to furnish the necessary resistance during interconnection of the individual finished laminations (2).

**Revendications**

1. Procédé pour la fabrication de paquets formés de lame de tôle pour machines électriques, notamment rotors ou stators, ces lames ayant des ouvertures centrales et des encoches et étant empilées dans des positions décalées de manière que les encoches forment dans les paquets des passages hélicoïdaux, ce procédé comportant le découpage de lames identiques dans une bande et la formation par emboutissage au moyen d'un poinçon agissant contre l'action antagoniste d'un contre-poinçon d'une creusure située sur un côté de la plaque et d'un bossage situé sur l'autre côté en coïncidence avec la creusure, et l'engagement sous précontrainte lors de l'assemblage d'un paquet, des bossages dans les creusures, dont la profondeur atteint au moins cinquante pour cent de l'épaisseur des lamelles, une lame servant dans chaque paquet de lame de séparation et étant pourvue, au lieu de la creusure, d'un trou cylindrique dans lequel le bossage de la lame adjacente pénètre, les creusures (10) et les bossages (11) étant emboutis pour chaque pièce en une opération en forme d'un rebord annulaire circulaire concentrique à l'ouverture centrale (12) qui est découpée au préalable, après quoi chaque lame terminée et séparée de la bande (1) est déplacée automatiquement en rotation d'un angle au centre qui peut être ajusté de manière continue, afin de donner aux passages ladite forme hélicoïdale.

2. Procédé selon la revendication 1, caractérisé en ce que sur chaque pièce, la creusure (10) et le bossage (11) sont formés soit immédiatement au bord de l'ouverture centrale (12), soit à une distance radiale prédéterminée du bord de l'ouverture centrale (12).

3. Dispositif pour la mise en œuvre du procédé de fabrication selon la revendication 1 de paquets de lames de tôle empilées, pourvues d'ouvertures centrales, de creusures et de bossages disposés chacun sous forme d'un anneau circulaire concentrique à l'ouverture centrale, dispositif constitué d'un outil à progression avec poinçon et matrice, comportant plusieurs stations de travail dont la dernière est une station de découpage (15) disposée dans l'embase de l'outil (16), avec un poinçon (34) qui agit dans ladite station de découpage, dispositif dans lequel la station de découpage (15) est également une station de rotation avec un support de matrice (3) et un canal d'évacuation des paquets (20), la surface enveloppe du support de matrice (3) étant équipée d'une denture (4) de roue pour vis sans fin dans laquelle engrène par intermittence, avec un rythme prédéterminé, une vis (5) entraînée ou d'une denture de roue dans laquelle agit par intermittence et avec un rythme prédéterminé une crémaillère, de sorte que le support de matrice est déplacé en rotation, après le découpage de chaque lame, d'un angle au centre qui peut être ajusté d'une manière continue.

4. Dispositif selon la revendication 3, caractérisé en ce que des éléments de freinage (19) agissant radialement sur les lames découpées (2) sont incorporés au support de matrice (3) pour produire la résistance nécessaire lors de la réunion des lames (2) d'un paquet.

FIG. 1

## FIG. 2

## FIG. 3

## FIG. 4

FIG. 5

FIG. 6

FIG. 7

FIG. 8

FIG. 9

FIG. 10

FIG. 11    FIG. 12